Europäisches Patentamt

(19) European Patent Office

Office européen des brevets

(11) Numéro de publication: **0 051 544**
**B1**

## (12) FASCICULE DE BREVET EUROPEEN

(45) Date de publication du fascicule du brevet:
19.03.86

(21) Numéro de dépôt: **81401762.0**

(22) Date de dépôt: **03.11.81**

(51) Int. Cl.⁴: **B 65 G 65/22,** B 65 G 53/42,
B 65 G 67/62, E 02 F 3/92

(54) Appareil à tête unique ou multiple destiné à l'extraction de produits meubles, pâteux, granuleux ou pulvérulents, humides ou non.

(30) Priorité: 04.11.80 FR 8023672

(43) Date de publication de la demande:
12.05.82 Bulletin 82/19

(45) Mention de la délivrance du brevet:
19.03.86 Bulletin 86/12

(84) Etats contractants désignés:
AT BE CH DE FR GB IT LI LU NL SE

(56) Documents cités:
BE - A - 735 935
DE - A - 2 805 101
FR - A - 2 077 398

(73) Titulaire: **ETABLISSEMENTS BRIAND S.A., Route des Sables, F-85500 Les Herbiers (FR)**

(72) Inventeur: **Baumard, Ulysse, St. Martin des Noyers, F-85140 Les Essarts (FR)**

(74) Mandataire: **Phélip, Bruno et al, c/o Cabinet Harlé & Phélip 21, rue de la Rochefoucauld, F-75009 Paris (FR)**

## Description

La présente invention concerne les appareils d'extraction opérant dans des produits meubles, pâteux, granuleux ou pulvérulents,ces appareils associés à des dispositifs d'évacuation étant destinés soit à l'extraction de terre,de sable,de vase,de céréales, de farines,de produits pétroliers,de nodules,ou de tous autres produits de même type,organiques ou minéraux.

Les appareils, généralement utilisés sont équipés soit de vis d'extraction du type vis d'Archimède, des chaines à godets ou de dispositifs suceurs,le choix de l'un ou l'autre de ces dispositifs étant dicté par des raisons de facilité d'intervention ou d'efficacité. Quel que soi le dispositif utilisé celui-ci est généralement placé en aval d'un outil dont l'action permet d'ameublir, de foisonner la masse du produit pour en faciliter la prise en charge et le transfert vers un dispositif de déversement ou d'évacuation. Dans certains cas, il est nécessaire d'adjoindre à l'outil un dispositif de dilution notamment dans le cas d'extraction de vase ou de boue. Il est également connu des appareils dans lesquels l'outil est disposé co-axialement à une vis de transfert;dans ces types d'appareils,l'outil seul est animé d'un sens de rotation autour de la rampe hélicoïdale constituant le dispositif de transfert, ou bien l'outil et la vis de transfert sont tous deux animés d'un mouvement de rotation mais de sens contraire ou de vitesse différente,ou encore sont séparés par des dispositifs déflecteurs. D'une façon générale, ces appareils sont relativement complexes et nécessitent une puissance d'énergie assez élevé.

En particulier le brevet FR 2 077.398 décrit un dispositif pour alimenter l'entrée d'un convoyeur avec les caractéristiques de la première partie de la revendication 1. Le dispositif comprend une vis d'Archimède entourée d'une gaine; dans ce dispositif la gaine de la vis est fixe; les aubes du dispositif d'extraction tournent à la même vitesse que la vis, mais les conduits ouverts qu'elles délimitent ne sont pas en continuité avec la vis; ils en sont séparés par des surfaces de guidage fixées sur la gaine et par conséquent, immobiles en rotation.

D'un autre côté, le document US-A-4 026 529 décrit un dispositif pour le mélange d'aliments du bétail qui comprend un collecteur vertical, équipé d'une vis hélicoïdale 64 tournant dans un fourreau cylindrique 62 et qui se raccorde à sa partie inférieure à un extracteur tournant formé d'une surface tronconique 65 sur la face extérieure de laquelle est enroulée une rampe hélicoïdale 66, dont le diamètre extérieur est plus grand que celui du fourreau cylindrique 62 et va en s'élargissant vers le bas Ce dispositif est plus simple que celui de FR-A-2 077 398 du fait que la rampe de l'extracteur se raccorde sans discontinuité à la vis hélicoïdale, mais cette rampe forme un conduit complètement ouvert vers l'extérieur, à la fois radialement et vers le haut,si bien que son efficacité dépend considérablement de la matière du produit,et peut etre très faible dans le cas de produits fluides ou solides en grains arrondis.

Par conséquent, il n'existe pas actuellement à la connaissance de l'inventeur,de dispositif qui,tout en étant simple, permette l'extraction de produits de caractéristiques physiques très différentes.

L'appareil, suivant l'invention, permet de réaliser simultanément l'extraction dans la masse d'un produit pâteux, granuleux ou pulvérulent, humide ou non et le transfert dudit produit vers un collecteur d'admission, suivi d'un compactage au sein dudit collecteur afin d'assurer une alimentation continue et accrue d'un dispositif d'évacuation vers un poste de chargement ou de déversement.

L'invention fournit donc un appareil permettant de réaliser simultanément l'extraction, dans la masse d'un produit pàteux, granuleux ou pulvérulent, humide ou non, et le transfert de ce produit vers un collecteur, cet appareil comportant:

-au moins un fourreau cylindrique d'axe vertical dans lequel peut tourner une vis hélicoïdale de diamètre correspondant au diamètre dudit fourreau,

-un dispositif d'extraction placé à la base dudit fourreau et comportant au moins un conduit hélicoïdal spiralé à section fermée dont une partie des parois est formée par une rampe hélicoïdale spiralée qui est solidaire de ladite vis, caractérisé en ce que:

-ladite rampe se raccorde sans discontinuité à ladite vis hélicoïdale,et est bordée latéralement par une paroi verticale et

-ladite paroi verticale se raccorde par sa partie supérieure à un plafond horizontal ou hélicoïdal limité extérieurement, en vue de dessus, par une courbe en forme de spirale qui vient se raccorder à ladite vis hélicoïdale du collecteur d'admission, et qui est percé d'un passage central de diamètre correspondant sensiblement à celui du fourreau correspondant,

-ledit conduit hélicoïdal spiralé à section transversale fermée est constitué par ladite paroi verticale, le moyeu central sur lequel s'enroule ladite rampe les faces supérieure et inférieure de ladite rampe ou desdites rampes et la face inférieure dudit plafond, et en ce que le ou lesdits fourreaux font partie d'un carter, formant un caisson destiné à constituer un collecteur d'admission du produit prélevé.

Suivant des modalités préférées,

-ledit plafond du dispositif d'extraction est surmonté d'une virole cylindrique assurant une étanchéité et un centrage du dispositif d'extraction par rapport au fourreau ceinture la partie supérieure,

-le conduit hélicoidal spiralé constituant la partie inférieure du dispositif d'extraction évolue en dessous du fond du carter de l'appareil,

-le ou les fourreaux sont prolongés d'une façon tangentielle par une tôle de manière à acheminer en le compactant le produit vers la zone de reprise d'un dispositif d'évacuation.

Le bord d'attaque de la partie inférieure spiralée correspondant au rayon peut comporter un biseautage afin de faciliter le tranchage du produit. Celui-ci une fois prélevé accède par la rampe hélicoïdale au niveau du fond du caisson formant collecteur, pour être acheminé à l'intérieur de celuici, vers un dispositif d'évacuation de type connu, aidé en cela par les parois latérales du caisson disposées tangentiellement au fourreau cylindrique ceinturant la partie supérieure de la rampe hélicoïdale et dirigée vers la zone de reprise dudit dispositif d'évacuation.

Les dessins annexés illustrent à titre d'exemple un mode de réalisation d'un appareil conforme a la présente invention, et comportant deux dispositifs d'extraction chacun d'eux étant équipé de deux rampes hélicoïdales. Ces dessins représentent:

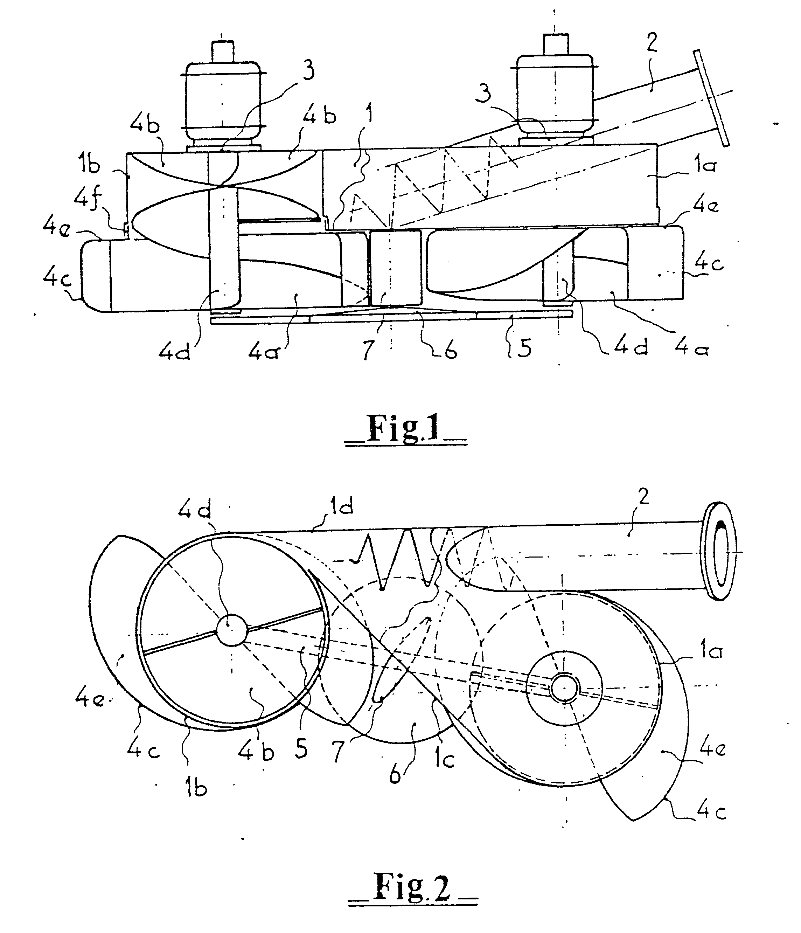

- en figure 1, une vue en élévation coupe partielle de l'appareil,

- en figure 2, une vue de dessus de l'appareil, la partie supérleure du carter supposée partiellement enlevée,

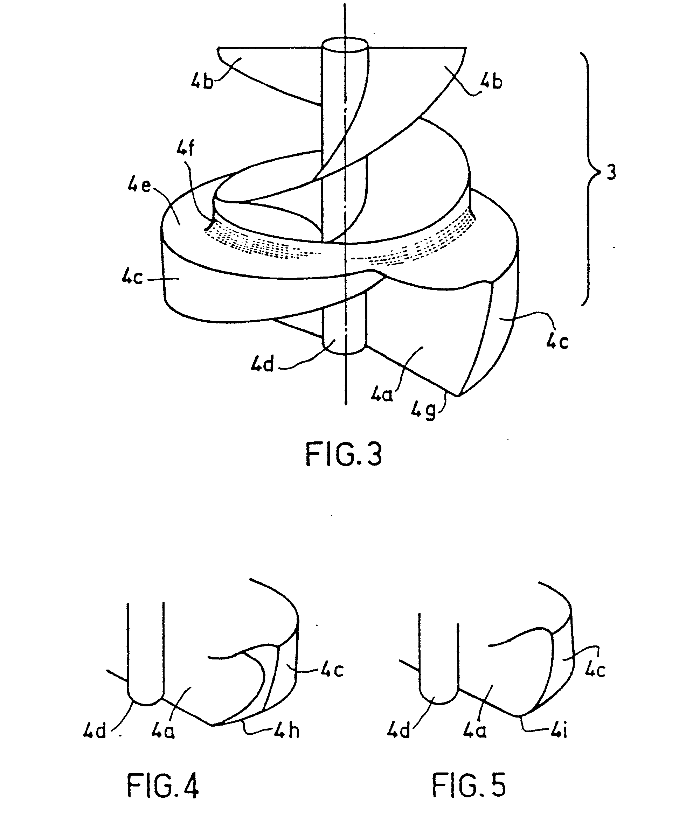

- en figure 3, une vue en perspective cavalière d'un dispositif d'extraction;

- en figures 4 et 5 deux vues partielles analogues à celles de la figure 3 et montrant deux variantes de l'appareil.

Tel qu'il est représenté, l'appareil se compose d'un carter 1 en tout matériau de bonne résistance mécanique formant caisson destiné à réaliser le collecteur d'admission du produit prélevé. Dans ce caisson est prévu un dispositif d'évacuation 2 de type connu, tel que dispositif suceur ou vis d'Archimède tel que représenté dans l'exemple de réalisation décrit. Le caisson comporte deux fourreaux cylindriques 1a et 1b d'axe vertical, prolongés d'une façon tangentielle respectivement par une tôle 1c et 1d, de manière à acheminer le produit prélevé vers la zone de reprise du dispositif d'évacuation 2. Dans chacun de ces fourreaux cylindriques évolue un dispositif d'extraction 3, consti-tué dans l'exemple choisi de deux rampes 4, chacune d'elles étant de forme hélicoïdale spiralée 4a, sur une certaine hauteur à partir de la base pour se prolonger en partie supérieure 4b par une simple vis hélicoïdale, cette dernière ayant un diamètre correspondant au diamètre des fourreaux 1a, 1b. La partie spiralée 4a est bordée latéralement par une paroi verticale 4c de manière à réaliser avec le moyeu central 4d sur lequel s'enroule la rampe, un conduit fermé par lequel s'achemine le produit prélevé, vers la partie supérieure 4b. Ce conduit s'apparente à une coquille d'escargot tronquée en sa partie supérieure. Les parties supérieure et inférieure sont séparées par un plafond horizontal ou hélicoïdal 4e sur les bords duquel se raccordent les parois verticales 4c: ce plafond de forme spiralée est surmonté d'une virole cylindrique 4f de faible hauteur dont le diamètre intérieur correspond au diamètre extérieur de la partie supérieure 4b de la rampe, la dite virole cylindrique assurant l'étanchéité et le centrage du dispositif d'extraction ainsi constitué par rapport au fourreau cylindrique 1a ou 1b ceinturant ladite partie supérieure. Ainsi, la partie inférieure du dispositif d'extraction bordée par la paroi verticale 4c et limitée en hauteur au plafond 4e, évolue en-dessous du fond du carter 1. Le bord d'attaque 4g de la partie inférieure spiralée disposé selon un rayon de la spirale comporte un biseautage afin de faciliter le tranchage du produit.

Aux figures 1 à 3, la partie spiralée 4a est coupée par un plan radial selon une droite horizontale qui se raccorde directement à la paroi verticale 4c. Selon une variante avantageuse, qui fait l'objet des figures 4 et 5, la partie spiralée 4a se raccorde à la paroi verticale 4c par une partie oblique 4h ou une partie incurvée 4i, ce qui évite la présence d'un angle vif, plus sujet à usure qu'un angle biseauté ou arrondi.

Le dispositif d'extraction ainsi constitué s'assimile à une pelle: son entraînement en rotation est assuré par tous moyens connus, électriques, hydrauliques ou pneumatiques. Les vitesses de rotation des dispositifs d'extraction et d'évacuation sont indépendantes les unes des autres et variables en fonction de la nature et de la compacité du produit à extraire. C'est ainsi que dans certains cas, la vitesse de rotation du dispositif d'extraction peut être supérieure à celle du dispositif d'évacuation afin d'obtenir la compression du produit au sein du collecteur avant sa prise en charge par ledit dispositif d'évacuation. Les axes de rotation des dispositifs d'extraction peuvent être reliés en leur partie inférieure par une traverse 5 comportant en son milieu un plateau amovible 6 favorisant le déplacement et la mise en appui de l'appareil sur un fond solide et permettant de limiter l'exploitation en profondeur par couches successives.

Pour favoriser la préhension de la matière à extraire par le bord d'attaque de chaque dispositif d'extraction il peut être prévu un ou plusieurs déflecteurs 7, disposés obliquement par rapport à la zone de révolution dudit dispositif d'extraction, le freinage relatif provoqué par ce ou ces déflecteurs sur la partie du produit poussée en avant du bord d'attaque, forçant celui-ci à franchir ledit bord d'attaque.

Tel qu'il est défini l'appareil peut etre utilisé sans qu'il lui soit associé un dispositif de dilution ou de foisonnement.

L'invention ne se limite pas au mode de réalisation spécialement décrit. C'est ainsi que sans sortir du cadre de l'invention, l'appareil peut comporter un seul ou plus de deux dispositifs d'extraction, lequel ou lesquels peut ou peuvent être dotés d'une seule ou de plusieurs rampes hélicoïdales.

L'appareil, objet de l'invention, peut être utilisé pour toute extraction de produits pâteux, granuleux ou pulvérulents. C'est ainsi que son application peut être envisagée pour le curage de vase ou de sable, l'extraction de produits pétroliers pour la manutention de céréales en grains ou de farines ou de tous produits en poudre,pour l'extraction et la manutention de nodules et de tous produits organiques ou minéraux.

**Revendications**

1. Appareil permettant de réaliser simultanément l'extraction, dans la masse d'un produit pâteux, granuleux ou pulvérulent, humide ou non, et le transfert de ce produit vers un collecteur, cet appareil comportant:
— au moins un fourreau cylindrique (1a, 1b) d'axe vertical dans lequel peut tourner une vis hélicoidale (4b) de diamètre correspondant au diamètre dudit fourreau,
— un dispositif d'extraction placé à la base dudit fourreau et comportant au moins un conduit hélicoidal spiralé à section fermée dont une partie des parois est formée par une rampe hélicoidale spiralée (4a)qui est solidaire de ladite vis, caractérisé en ce que:
— ladite rampe (4a) se raccorde sans discontinuité à ladite vis hélicoidale, et est bordée latéralment par une paroi verticale (4c) et
— ladite paroi verticale se raccorde par sa partie supérieure à ladite vis hélicoidale du collecteur d'admission, et qui est percé déun passage central de diamètre correspondant sensiblement à celui du fourreau correspondant,
— ledit conduit hélicoidal spiralé à section transversale fermée est constitué par ladite paroi verticale, le moyeu central (4d) sur lequel s'enroule ladite rampe (4a), les faces supérieure et inférieure de ladite rampe ou destites rampes et la face inférieure dudit plafond, et en ce que le ou lesdits fourreaux (1a, 1b) font partie d'un carter (1), formant un caisson destiné à constituer un collecteur d'admission du produit prélevé.

2. Appareil selon la revendication 1, caractérisé en ce que ledit plafond (4e) du dispositif d'extraction est surmonté d'une virole cylindrique (4f) assurant une étanchéité et un centrage du dispositif d'extraction par rapport au fourreau ceinturant la partie supérieure.

3. Appareil selon la revendication 1 ou 2, caractérisé en ce que le conduit hélicoïdal spiralé constituant la partie inférieure du dispositif d'extraction évolue en dessous du fond du carter de l'appareil.

4. Appareil selon l'une des revendications 1 à 3, caractérisé en ce que la partie inférieure spiralée (4a) se raccorde à la paroi verticale (4c) par l'intermédiaire d'une partie oblique (4h).

5. Appareil selon la revendication 1 à 3, caractérisé en ce que la partie inférieure spiralée (4a)se raccorde à la paroi verticale (4c) par l'intermédiaire d'une partie arrondie (4i).

6. Appareil selon l'une des revendications 1 à 5, caractérisé en ce que le ou les fourreaux (1a, 1b) sont prolongés d'une façon tangentielle par une tôle (1c, 1d) de manière à acheminer en le compactant le produit vers la zone de reprise d'un dispositif d'évacuation (2).

7. Appareil selon la revendication 1 à 6, caractérisé par le fait qu'il comporte en sa partie inférieure une traverse (5) reliant les extrémités des axes de rotation des dispositifs d'extraction, laquelle traverse comporte un plateau amovible (6) permettant la mise en appui de l'appareil sur un fond solide et son intervention en profondeur par couches successives.

8. Appareil selon l'une des revendications 1 à 7, caractérisé en ce qu'il comporte, à la partie inférieure du carter,un ou plusieurs déflecteur (7) disposes obliquement par rapport à la zone de révolution de chaque dispositif d'extraction, le freinage relatif provoqué par ce ou ces déflecteurs sur la partie du produit poussée en avant dudit dispositif forçant ledit produit à franchir le bord d'attaque de la rampe hélicoïdale spiralée constituant la partie inférieure du dispositif.

**Claims**

1. Apparatus which makes it possible to achieve, simultaneously, extraction from a mass of a pasty, granular or powdery product, whether it is wet or not, and the transfer of this product to a collector, this apparatus comprising:
- at least one cylindrical sleeve (la, lb), with its axis vertical, within which a helical screw (4b) is able to rotate, whose diameter corresponds to that of the said sleeve,
- an extraction device positioned at the base of the said sleeve and possessing at least one spiral helical channel of closed section, one part of the walls of which is formed by a spiral helical ramp (4a) which is integral with the said screw, which apparatus is characterized in that:
- the said ramp (4a) is smoothly joined to the said helical screw and is bordered laterally by a vertical wall (4c), and
- the upper part of the said vertical wall joins onto a horizontal (4e) or helical cover which when viewed from above is defined on the outside by a curve in the shape of a spiral which joins up with the said helical screw of the inlet collector and is pierced by a central passage the diameter of which is substantially the same as that of the corresponding sleeve,
- the said spiral helical channel of closed transverse section is formed by the said vertical wall, the central hub (4d) on which the said ramp (4a) is wound, the upper and lower surfaces of the said ramp or ramps and the lower surface of the said cover, and in that the said sleeve(s) (1a, 1b;) form(s) part of a casing (1) which forms a container intended to constitute an inlet collector for the drawn-off product.

2. Apparatus according to Claim 1, characterized in that there is a cylindrical collar (4f) on top of the said cover (4e) of the extraction device, which collar ensures leaktightness and centring of the extraction device in relation to the sleeve encircling the upper part.

3. Apparatus according to Claim 1 or 2, characterized in that the spiral helical channel which forms the lower part of the extraction device develops below the bottom of the casing of the apparatus.

4. Apparatus according to one of Claims 1 to 3, characterized in that the lower spiral part (4a) joins up with the vertical wall (4c) by means of an oblique portion (4h).

5. Apparatus according to Claims 1 to 3, characterized in that the lower spiral part (4a) joins up with the vertical wall (4c) by means of a rounded portion (4i).

6. Apparatus according to one of Claims 1 to 5, characterized in that the sleeve(s) (1a, 1b) are extended in a tangential manner by a metal sheet (1c, 1d) so as to direct the product, whilst compacting it, towards the take-up zone of a discharge device (2).

7. Apparatus according to Claims 1 to 6, characterized in that it includes a cross-piece (5), in its lower part, which connects the ends of the rotary shafts of the extraction devices, which cross-piece includes a detachable plate (6) which enables the device to be supported on a solid base and act at depth by successive layers.

8. Apparatus according to one of Claims 1 to 7, characterized in that in the lower part of the casing it possesses one or more baffle plates (7) arranged in an oblique manner relative to the zone of revolution of each extraction device, the relative braking produced by this or these baffle plate(s) on the portion of the product pushed ahead of the said device forcing the said product to cross the leading edge of the spiral helical ramp which forms the lower part of the device.

**Patentansprüche**

1. Anlage zum Extrahieren eines pastösen, körnigen oder pulverförmigen Produktes, das feucht oder trocken sein kann, aus einer Masse und zum gleichzeitigen Transport des Produktes zu einer Sammeleinrichtung mit

- wenigstens einem zylindrischen Gehäuse (1a, 1b) mit vertikaler Achse, in dem sich eine Schnecke (4b) drehen kann, deren Durchmesser demjenigen des Gehäuses entspricht,
- einer Extraktionsvorrichtung, die an der Basis des Gehäuses angeordnet ist und die wenigstens eine schraubenförmig-spiralförmige Leitung mit geschlossenem Querschnitt aufweist, deren einer Leitungsteil von einer schraubenförmigspiralförmigen Rampe (4a)
- gebildet ist, die mit der Schnecke verbunden ist, dadurch gekennzeichnet, daß
- die Rampe (4a) ohne Unterbrechung an die Schnecke angeschlossen und seitlich von einer Vertikalwand (4c) abgeschlossen ist und daß
- die Vertikalwand in ihrem oberen Teil in eine horizontale oder schraubenförmige Wand (4e) übergeht, die in einer Draufsicht außen von einer spiralförmigen Kurve begrenzt wird, die sich an die Schneche der Sammelein richtung anschließt und die von einer Zentralleitung durchquert wird, deren Durchmesser im wesentlichen demjenigen des entsprechenden Gehäuses entspricht,
- wobei die Leitung von der Vertikalwand, dem Mittelteil (4d), an dem die Rampe (4a) entlangläuft, der Oberseite und der Unterseite der Rampe (n) und von der Unterseite der Wand gebildet wird und das oder die Gehäuse (1a, 1b) Teil eines Gesamtgehäuses (1) sind, das einen Kasten ausbildet, der eine Sammeleinrichtung für das abgeschiedene Produkt ausbildet.

2. Anlage nach Anspruch 1, dadurch gekennzeichnet, daß über der Wand (4e) ein zylindrischer Ring (4f) vorgesehen ist, der die Extraktionsvorrichtung bezüglich des den oberen Teil umgebenden Gehäuses abdichtet und zentriert.

3. Anlage nach Anspruch 1 oder 2, dadurch gekennzeichnet, daß die den unteren Teil der Extraktionsvorrichtung ausbildende Leitung sich unterhalb des Bodens des Kastens erstreckt.

4. Anlage nach einem der Ansprüche 1 bis 3, dadurch gekennzeichnet, daß der untere, spiralförmige Teil (4a) über einen geneigten Teil (4h) in die Wand (4c) übergeht.

5. Anlage nach einem der Ansprüche 1 bis 3, dadurch gekennzeichnet, daß der untere, spiralförmige Teil (4a) über einen abgerundeten Teil (4i) in die Wand (4c) übergeht.

6. Anlage nach einem der Ansprüche 1 bis 5, dadurch gekennzeichnet, daß das oder die Gehäuse (1a, 1b) tangential über ein Blech (1c, 1d) derart verlängert sind, daß das Produkt zur Aufnahmezone einer Evakuierungseinrichtung (2) gedrückt wird.

7. Anlage nach einem der Ansprüche 1 bis 6, dadurch gekennzeichnet, daß im unteren Teil eine Traverse (5) vorgesehen ist, die die Drehdchsen der Extraktionseinrichtungen miteinander verbindet und die eine lösbare Plattform(6) hat, über die die Anlage sich über Lagerschalen auf einem festen Boden abstützen kann.

8. Anlage nach einem der Ansprüche 1 bis 7, dadurch gekennzeichnet, daß am unteren Teil des Gesamtgehäuses wenigstens ein Ablenkelement (7) vorgesehen ist, das bezüglich der Drehungszonen der Extraktionsvorrichtungen geneigt angeordnet ist und das über die von dem an ihm vorbeigehenden Produkt ausgeübte Bremskraft dieses Produkt zur Angriffskante der Rampe zwingt, die den unteren Teil der Vorrichtung ausbildet.

**_Fig.1_**

**_Fig.2_**

2/2

FIG.3

FIG.4

FIG.5

3